# EUROPÄISCHE PATENTANMELDUNG

(11) **EP 2 639 347 A1**
(43) Veröffentlichungstag der Anmeldung: **18.09.2013**
(21) Anmeldenummer: 13159037.4
(22) Anmeldetag: 13.03.2013
(51) Int. Cl.: D03D 27/10, A47G 27/02, D06Q 1/14, D03D 15/04

(54) **Textiles Flächengebilde mit Erhöhungen und Vertiefungen in Streifenstruktur**

(30) Priorität: 16.03.2012 DE 102012005168
(71) Anmelder: E. Schoepf GmbH & Co. KG, 95236 Stammbach (DE)
(72) Erfinder: Klötzer, Erich, 95369 Untersteinach (DE)
(74) Vertreter: Louis Pöhlau Lohrentz

(57) **Zusammenfassung**

Es wird ein textiles Flächengebilde (1) mit mindestens einer flächigen Seite, die eine Streifenstruktur aufweist, beschrieben. Die Streifenstruktur ist aus parallel nebeneinander angeordneten Streifen gebildet, wobei die Streifen über ihre Längserstreckung konstante Höhe aufweisen und parallel nebeneinander angeordnete Streifen ein periodisches Profil von streifenförmigen Erhebungsbereichen und streifenförmigen Vertiefungsbereichen bilden.

Die Periode des periodischen Profils weist mindestens einen einen streifenförmigen Erhebungsbereich bildenden maximal hohen ersten Streifen (15) auf, auf dessen einer Seite mindestens ein einen streifenförmigen Vertiefungsbereich bildender zweiter Streifen (13) angeordnet ist und auf dessen anderer Seite mindestens ein einen streifenförmigen Vertiefungsbereich bildender dritter Streifen (14) angeordnet ist. Der zweite Streifen (13) und der dritte Streifen (14) sind niedriger als der erste Streifen und hinsichtlich Farbe und/oder Materialstruktur und/oder Höhe unterschiedlich ausgebildet, derart, dass bei einer Betrachtung in einer Blickrichtung auf eine Seite des ersten Streifens der erste Streifen (15) den dritten Streifen (14) optisch abdeckt und in einer Blickrichtung auf die andere Seite des ersten Streifens der erste Streifen (15) den zweiten Streifen (13) optisch abdeckt und damit blickrichtungsabhängig unterschiedliche optische Effekte erhalten werden.

## Beschreibung

Die Erfindung betrifft ein textiles Flächengebilde mit mindestens einer flächigen Seite, die eine Streifenstruktur aufweist.

Eine Ausführungsform eines solchen textilen Flächengebildes ist z. B. ein Velours. Velours weist eine textile Grundschicht auf, von der Florfäden und/oder Florschlingen abstehen. Die textile Grundschicht kann als Gewebe, Gewirke oder Gestrick ausgebildet sein.

Es sind bereits textile Flächengebilde der vorgenannten Art bekannt, die gewisse optische Effekte zeigen, die über die von herkömmlichen Textilien hinausgehen.

So beschreibt die DD 147 122 ein textiles Flächengebilde, das die Anmutung von Wildleder hat.

Die DE 298 01 561 U1 beschreibt ein Innenverkleidungsteil für Kraftfahrzeuge aus einem textilen Flächengebilde, das Vertiefungen aufweist, die vorzugsweise durch thermoplastische Verformung von thermoplastischen Fasern ausgebildet sind, wobei in den Vertiefungen eine glänzende Schmelzhaut ausgebildet sein kann. Durch die Prägung erhält die Oberfläche des Innenverkleidungsteils eine plastische Struktur.

Die DE 102 24 489 A1 beschreibt einen Bodenbelag mit dreidimensionaler Optik, herstellbar nach der Rutenweb-Technologie, wobei die Effekte durch Metalleffektgarne mit Glanz- und Mattierungseffekten ausgebildet werden. Es wird so ein dreidimensional wirkender optischer Effekt ausgebildet. Die Effekte können blickwinkelabhängig sein.

Aufgabe der vorliegenden Erfindung ist es, ein textiles Flächengebilde zu entwickeln, das einfach insbesondere auch als bahnenförmiges Material herstellbar ist und einen blickwinkelabhängigen optischen Effekt ausbildet.

Erfindungsgemäß wird diese Aufgabe mit dem Gegenstand des Anspruchs 1 gelöst. Es wird ein textiles Flächengebilde mit mindestens einer flächigen Seite, die eine Streifenstruktur aufweist, vorgeschlagen, und wobei vorgesehen ist, dass die Streifenstruktur aus parallel nebeneinander angeordneten Streifen gebildet ist, wobei die Streifen über ihre Längserstreckung konstante Höhe aufweisen und parallel nebeneinander angeordnete Streifen ein periodisches Profil von streifenförmigen Erhebungsbereichen und streifenförmigen Vertiefungsbereichen bilden, dass die Periode des periodischen Profils mindestens einen einen streifenförmigen Erhebungsbereich bildenden maximal hohen ersten Streifen aufweist, auf dessen einer Seite mindestens ein einen streifenförmigen Vertiefungsbereich bildender zweiter Streifen angeordnet ist und auf dessen anderer Seite mindestens ein einen streifenförmigen Vertiefungsbereich bildender dritter Streifen angeordnet ist, wobei der zweite Streifen und der dritte Streifen niedriger als der erste Streifen sind und hinsichtlich Farbe und/oder Materialstruktur und/oder Höhe unterschiedlich ausgebildet sind, derart,
dass bei einer Betrachtung in einer Blickrichtung auf eine Seite des ersten Streifens der erste Streifen den dritten Streifen optisch abdeckt und in einer Blickrichtung auf die andere Seite des ersten Streifens der erste Streifen den zweiten Streifen optisch abdeckt und damit blickrichtungsabhängig unterschiedliche optische Effekte erhalten werden.

Das vorgeschlagene textile Flächengebilde weist den Vorteil auf, dass es aufgrund der periodischen Streifenstruktur einfach herstellbar ist, und zwar auch als bahnenförmiges Material. Aufgrund der unterschiedlichen Höhenniveaus der Streifenstruktur ergibt sich eine große Vielfalt von unterschiedlichen Gestaltungsmöglichkeiten für die Erzeugung von blickrichtungsabhängig unterschiedlichen optischen Effekten.

Es kann bevorzugt vorgesehen sein, dass die Periode aus genau drei Streifen gebildet ist, nämlich dem einen ersten Streifen, dem einen zweiten Streifen und dem einen dritten Streifen. Die Herstellung ist besonders einfach, gegebenenfalls auch unter Einsatz herkömmlicher Textilerzeugungsmaschinen.

Es kann aber auch vorgesehen sein, dass die Periode aus mehr als drei Streifen gebildet ist.

Die Periode kann auf der einen Seite des ersten Streifens mehrere zweite Streifen aufweisen, die gleich oder unterschiedlich hoch, jedoch jeweils niedriger sind als der erste Streifen.

Die Periode kann auf der anderen Seite des ersten Streifens mehrere dritte Streifen aufweisen, die gleich oder unterschiedlich hoch, jedoch niedriger sind als der erste Streifen.

Bei genau drei Streifen können der eine zweite Streifen und der eine dritte Streifen gleiche Höhe aufweisen oder unterschiedliche Höhen aufweisen.

Es kann auch vorgesehen sein, dass die mehreren zweiten Streifen in ihrer Höhengestaltung gleich ausgebildet sind wie die mehreren dritten Streifen.

Weiter kann vorgesehen sein, dass die mehreren zweiten Streifen in ihrer Höhengestaltung anders ausgebildet sind als die mehreren dritten Streifen.

In einer bevorzugten Ausbildung kann vorgesehen sein, dass die zweiten und die dritten Streifen einen Streifenraster aus zwei unterschiedlichen, ineinander verschachtelten Bildern bilden, wobei ein erstes Bild die zweiten Streifen umfasst und ein zweites Bild die dritten Streifen umfasst. Die beiden Bilder können sich beispielsweise farblich und/oder im Muster und/oder im Motiv voneinander unterscheiden.

Weiter kann vorgesehen sein, dass die zweiten Streifen und die dritten Streifen in aufeinanderfolgenden Perioden unterschiedliche Bildeindrücke aufweisen.

Das textile Flächengebilde kann bahnförmig ausgebildet sein und die Streifenstrukturen können quer zur Längserstreckung der Bahn angeordnet sein.

Alternativ kann das textile Flächengebilde bahnförmig ausgebildet sein und die Streifenstrukturen können parallel zur Längserstreckung der Bahn angeordnet sein.

In einer bevorzugten Ausbildung kann vorgesehen sein, dass das textile Flächengebilde eine textile Grundschicht aufweist, von der Florfäden und/oder Florschlingen abstehen, welche die ersten, zweiten und dritten Streifen bilden. Eine Ausführungsform eines solchen textilen Flächengebildes ist Velours. Die textile Grundschicht kann als Gewebe, Gewirke oder Gestrick ausgebildet sein.

Es kann vorgesehen sein, dass die die ersten Streifen bildenden Florfäden und/oder Florschlingen aus einem in der Fadenachse nicht schrumpfbaren Garn ausgebildet sind, und dass die die zweiten und dritten Streifen bildenden Florfäden und/oder Florschlingen aus einem in der Fadenachse schrumpfbaren Garn ausgebildet sind. Damit wird die unterschiedliche Fadenlänge in den ersten sowie zweiten und dritten Streifen auf einfache Weise durch die unterschiedlichen Garnsorten erzielt, ohne Veränderungen an den Webstühlen vornehmen zu müssen.

Das in der Fadenachse schrumpfbare Garn kann ein vorgerecktes Krümpel-oder Schrumpfgarn sein.

Es kann aber auch vorgesehen sein, dass das in der Fadenachse schrumpfbare Garn ein unter Temperatureinwirkung schrumpfendes Garn ist.

In einer weiteren Ausführung kann vorgesehen sein, dass das textile Flächengebilde eine Grundschicht aufweist, mit der Florfäden stoffschlüssig verbunden sind.

Die Grundschicht kann als eine Kunststofffolie oder eine Schaumstoffschicht ausgebildet sein.

Auf der Grundschicht kann eine Kleberschicht angeordnet sein. Bei dem Kleber kann es sich beispielsweise um einen thermoplastischen oder um einen Kontaktkleber handeln

Das erfindungsgemäße textile Flächengebilde kann vielfältig verwendet werden:
- als Wand- und/oder Deckenverkleidung und/oder Fußbodenbelag für den Innenraum eines Fahrzeugs;
- als Verkleidung für Wände und/oder Decken und/oder Einbauten für Innenräume eines Gebäudes;
- als Verkleidung und/oder Bezug für Möbel und/oder
   Gebäudeeinrichtungsgegenstände und/oder Fahrzeugsitze und/oder Gebrauchsgegenstände oder
- als Dekorstoff für Innendekoration.

Die Erfindung wird nun anhand von Ausführungsbeispielen näher erläutert. Es zeigen
- Fig. 1: ein erstes Ausführungsbeispiel des erfindungsgemäßen textilen Flächengebildes in einer schematischen Draufsicht;
- Fig. 2: das textile Flächengebilde in Fig. 1 in einer schematischen Schnittdarstellung längs der Schnittlinie II-II in Fig. 1;
- Fig. 3: das textile Flächengebilde in Fig. 1 aus der Blickrichtung III in Fig. 2 in einer schematischen Draufsicht;
- Fig. 4: das textile Flächengebilde in Fig. 1 aus der Blickrichtung IV in Fig. 2 in einer schematischen Draufsicht;
- Fig. 5: ein zweites Ausführungsbeispiel des erfindungsgemäßen textilen Flächengebildes in einer schematischen Draufsicht;
- Fig. 6: das textile Flächengebilde in Fig. 5 aus der Blickrichtung VI in Fig. 5 in einer schematischen Draufsicht;
- Fig. 7: das textile Flächengebilde in Fig. 5 aus der Blickrichtung VII in Fig. 5 in einer schematischen Draufsicht;
- Fig. 8: eine Fertigungsvorstufe der textilen Flächengebilde in Fig. 1 bis 7 in einen schematischen Querschnitt;
- Fig. 9: eine perspektivische Detailansicht zum Aufbau des textilen Flächengebildes in Fig. 8;
- Fig. 10: eine Vorderansicht des textilen Flächengebildes in Fig. 9;
- Fig. 11: ein drittes Ausführungsbeispiel des erfindungsgemäßen textilen Flächengebildes in einer schematischen Schnittansicht;
- Fig. 12: eine Fertigungsvorstufe des textilen Flächengebildes in Fig. 11.

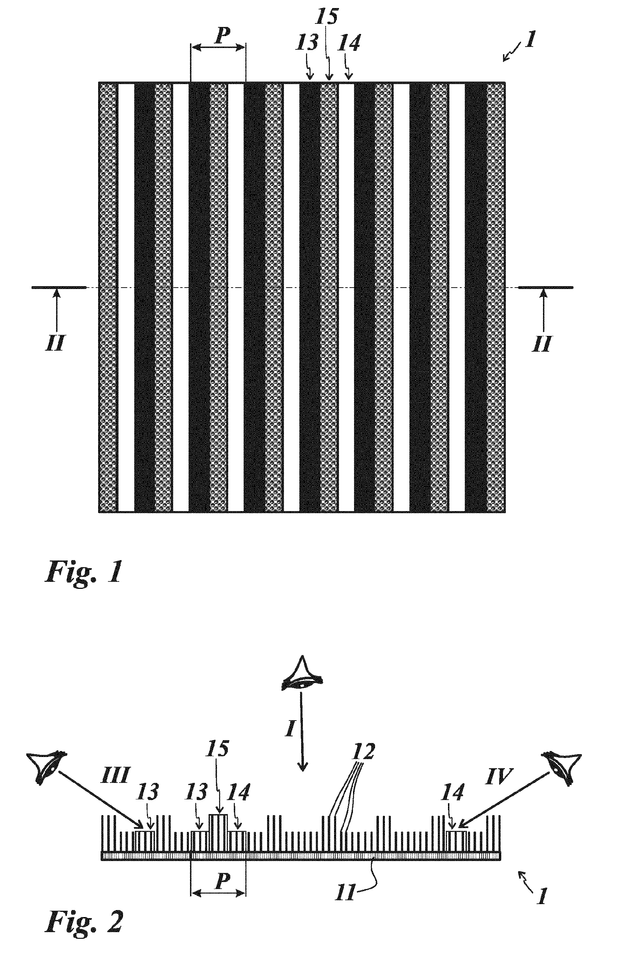

Die Fig. 1 bis 4 zeigen ein erstes Ausführungsbeispiel des erfindungsgemäßen textilen Flächengebildes.

Fig. 2 zeigt in einer schematischen Schnittdarstellung ein textiles Flächengebilde 1, das Florfäden 12 unterschiedlicher Länge aufweist, die von einer textilen Grundschicht 11 abstehen. Florfäden 12 gleicher Länge bilden Streifen bestimmter konstanter Höhe. In dem in Fig. 1 bis 4 dargestellten Ausführungsbeispiel sind die Florfäden 12 mit der größten Länge in ersten Streifen 15 angeordnet. Florfäden 12 mit einer geringeren Länge als die im ersten Streifen 15 angeordneten Florfäden 12 bilden zweite Streifen 13 und dritte Streifen 14. Die ersten, zweiten und dritten Streifen 15, 13 und 14 bilden Perioden P eines in seiner Höhe stufenförmigen Oberflächenprofils, das einem Betrachter bei senkrechter Betrachtung von oben als ein streifenförmiges Muster erscheint, wie in Fig. 1 zu erkennen.

Bei dem streifenförmigen Muster kann es sich um ein Bildraster handeln, das aus zwei unterschiedlichen, ineinander geschachtelten Bildern gebildet ist. Als Bild wird hier ein optischer Bildeindruck verstanden, der durch einen Farbeindruck und/oder einen Oberflächeneindruck hervorgerufen ist. Der Oberflächeneindruck kann beispielsweise "glänzend", "rau", "samtig" oder dergleichen sein.

Die beiden dem ersten Streifen 15 benachbarten zweiten und dritten Streifen 13 und 14 weisen einen unterschiedlichen optischen Bildeindruck auf. In dem in Fig. 1 bis 4 dargestellten Ausführungsbeispiel handelt es sich um einen Farbeindruck. Der zweite Streifen 13 ist schwarz und der dritte Streifen 14 ist weiß eingefärbt. Der erste Streifen 15 kann beispielsweise grau eingefärbt sein.

Die ersten Streifen 15 rufen einen blickrichtungsabhängigen und/oder blickwinkelabhängigen optischen Effekt hervor, indem sie bei seitlicher Betrachtung des textilen Flächengebildes 1 die unmittelbar hinter den ersten Streifen 15 angeordneten zweiten oder dritten Streifen 13, 14 verdecken und so einen der beiden Bildeindrücke vollständig oder teilweise ausblenden.

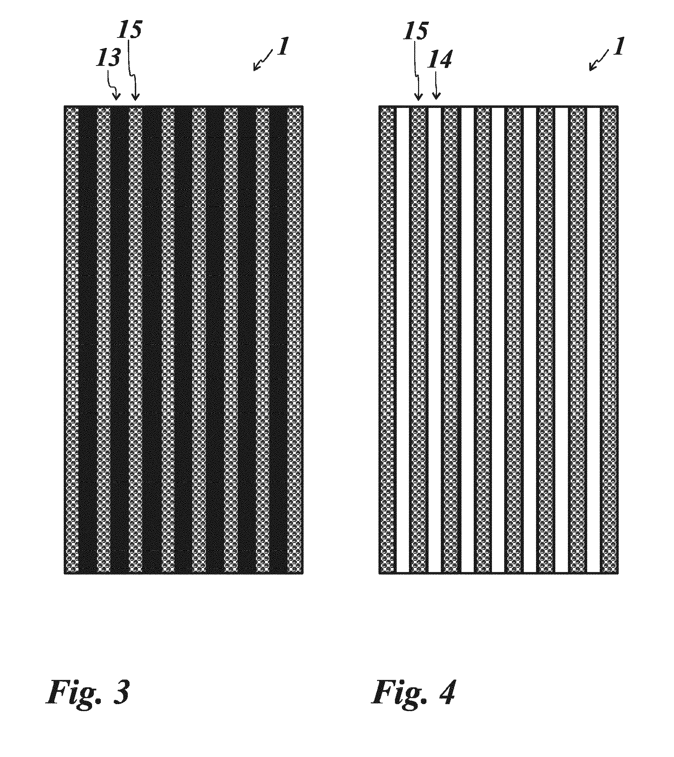

Vom Auge eines von der linken Seite des textilen Flächengebildes 1 blickenden Betrachters ausgehende Sehstrahlen III treffen auf die schwarzen zweiten Streifen 13, die vom Standpunkt des Betrachters vor ersten grauen Streifen 15 angeordnet und daher sichtbar sind, während die hinter den ersten Streifen 15 angeordneten dritten Streifen 14 durch diese abgedeckt werden und daher unsichtbar sind. Der Betrachter erhält daher den in Fig. 3 dargestellten optischen Eindruck, dass die ersten grauen Streifen 15 auf einem schwarzen Untergrund angeordnet sind.

Vom Auge eines von der rechten Seite des textilen Flächengebildes 1 blickenden Betrachters ausgehende Sehstrahlen IV treffen stets auf die weißen dritten Streifen 14, die vom Standpunkt des Betrachters vor den ersten grauen Streifen 15 angeordnet sind und daher sichtbar sind, während die hinter den ersten grauen Streifen 15 angeordneten zweiten Streifen 13 durch diese abgedeckt werden und daher unsichtbar sind. Der Betrachter erhält daher den in Fig. 4 dargestellten optischen Eindruck, dass die ersten grauen Streifen 15 auf einem weißen Untergrund angeordnet sind.

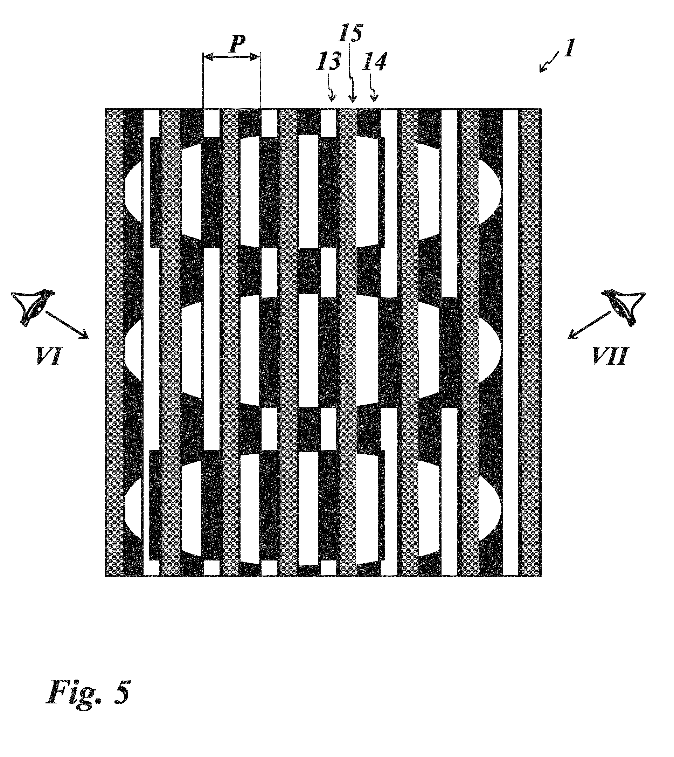

Die Fig. 5 bis 7 zeigen ein zweites Ausführungsbeispiel des textilen Flächengebildes, das sich von dem in Fig. 1 bis 4 dargestellten ersten Ausführungsbeispiel durch die Ausbildung des Musters unterscheidet.

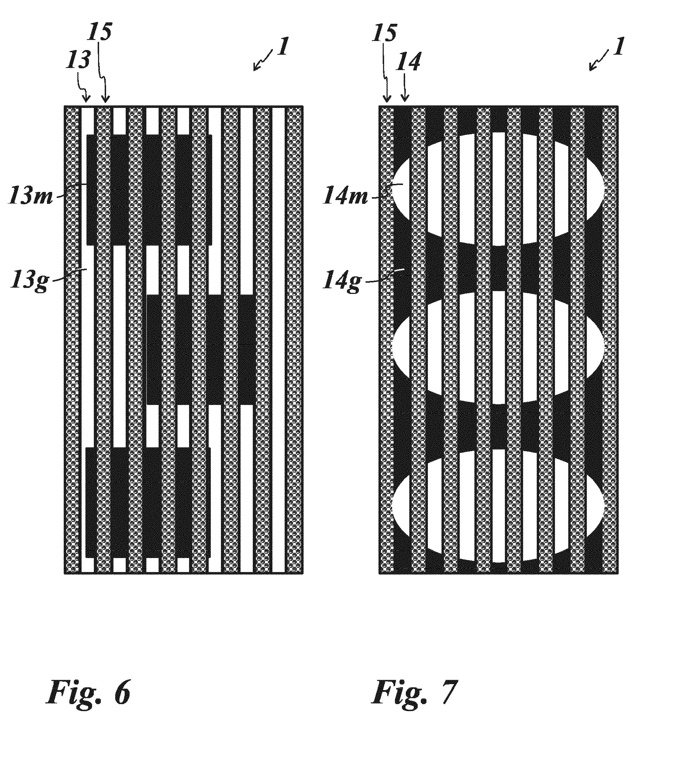

Wie insbesondere in Fig. 6 und 7 zu erkennen, bilden mehrere periodisch sich wiederholende zweite Streifen 13 bzw. dritte Streifen 14 ein zusammenhängendes Muster aus.

Die zweiten Streifen 13 zeigen bei seitlicher Betrachtung von links schwarze Rechtecke auf weißem Grund (Fig. 6). Die dritten Streifen 14 zeigen bei seitlicher Betrachtung von rechts weiße Ellipsen auf schwarzem Grund (Fig. 7). In der in Fig. 5 dargestellten Ansicht mit Blickrichtung senkrecht auf die Oberfläche des textilen Flächengebildes 1 wird ein abstraktes Schwarz-Weiß-Muster ausgebildet.

Es kann vorgesehen sein, statt der zwei beispielhaft als Schwarz und Weiß dargestellten Farben drei oder mehr Farben vorzusehen. Beispielsweise können für eine Wandbespannung die Untergrundfarben Dunkelblau und Hellblau vorgesehen sein, wobei auf der Untergrundfarbe dunkelblau goldene Sterne und auf der Untergrundfarbe Hellblau weiße Wolken angeordnet sein können, Nacht und Tag symbolisierend. Die beiden Bildmotive können so angeordnet sein, dass beim Betreten eines mit einer Wandbespannung aus dem textilen Flächengebilde 1 versehenen Raums das Nachtmotiv zu sehen ist und beim Verlassen des Raums das Tagmotiv.

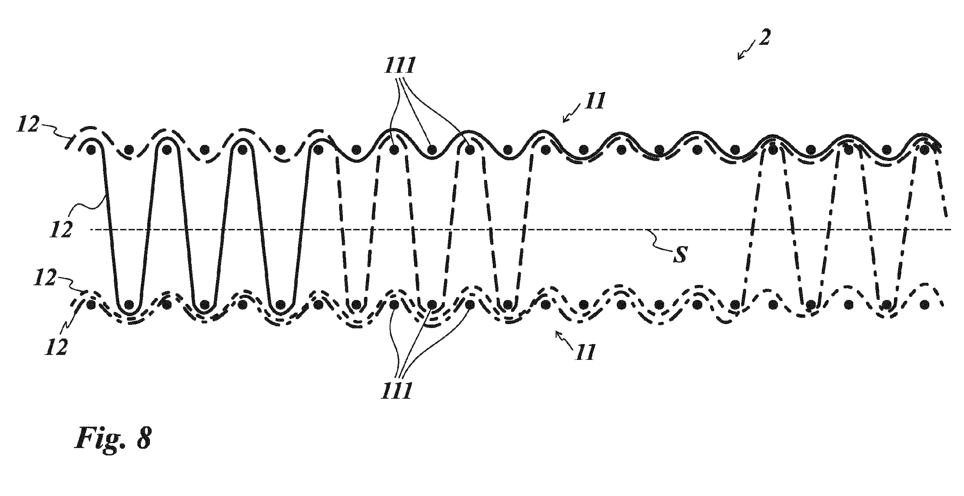

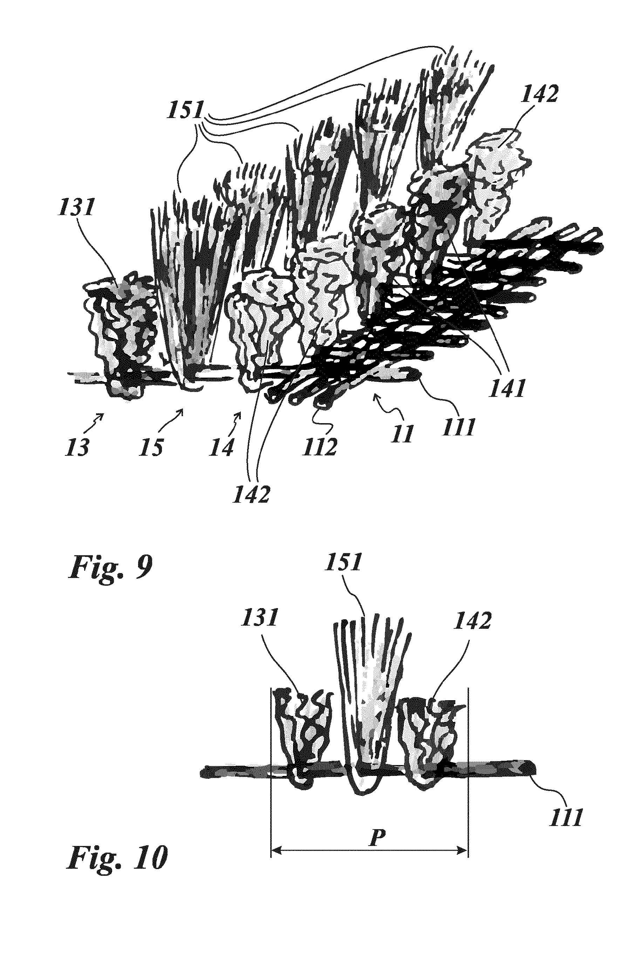

Die Figuren 8 bis 10 zeigen ein Fertigungsbeispiel des textilen Flächengebildes 1. Die textile Grundschicht 11 des textilen Flächengebildes 1 ist in diesem Beispiel als ein Gewebe aus Schussfäden 111 und Kettfäden 112 (siehe Fig. 9) ausgebildet, das die Florfäden 12 fixiert. Statt eines Gewebes kann auch ein Gewirke oder ein Gestrick vorgesehen sein.

Zunächst wird als Zwischenstufe ein textiles Flächengebilde 2 hergestellt, das zwei einander mit Abstand gegenüberliegende textile Grundschichten 11 aufweist. Das textile Flächengebilde 2 wird nach seiner Fertigstellung entlang einer mittig zwischen den beiden textilen Grundschichten 11 verlaufenden Schnittlinie S aufgetrennt. Dadurch werden zwei textile Flächengebilde 1 erhalten.

Das textile Flächengebilde 2 ist in dem in Fig. 8 dargestellten Ausführungsbeispiel beispielsweise ein 4-choriges Flächengebilde mit einer Jacquard-V-Bindung. Zwischen den mit Abstand gegenüberliegenden textilen Grundschichten 11 verlaufen vier unterschiedliche Florfäden 12. Die Florfäden 12 sind hinsichtlich ihrer Einfärbung und/oder ihres Schrumpfverhaltens unterschiedlich ausgebildet, wie weiter unten beschrieben. Die Florfäden 12 umschlingen abwechselnd die Schussfäden 111 der beiden Grundschichten 11. Es kann auch vorgesehen sein, dass die Florfäden 12 abwechselnd die Kettfäden der beiden Grundschichten 11 umschlingen.

Die Florfäden 12 bilden nach dem Auftrennen des textilen Flächengebildes 2 büschelförmige Polnoppen 131, 132, 141, 142 und 151 aus, die von der textilen Grundschicht 11 abstehen (siehe Fig. 9 und 10). Die Polnoppen 131 und 132 bilden zweite Streifen 13, die Polnoppen 141 und 142 bilden dritte Streifen 14, und die Polnoppen 151 bilden erste Streifen 15, in denen die Florfäden 12 länger als in den zweiten und dritten Streifen 13 und 14 sind, wie weiter oben beschrieben.

Die unterschiedliche Länge der Florfäden 12 wird durch unterschiedliche Garnsorten ausgebildet. Die Florfäden 12 in den ersten Streifen 15 sind aus einem Garn ausgebildet, das nach dem Auftrennen des textilen Flächengebildes 2 seine Länge beibehält. Die Florfäden 12 in den zweiten und dritten Streifen 13 und 14 sind aus einem sog. Krinkelgarn ausgebildet, das in gerecktem Zustand verwebt wird und nach dem Auftrennen der Florfäden 12 in seiner Länge schrumpft, so dass die Länge der Florfäden 12 in den zweiten und dritten Streifen 13 und 14 kleiner ist als in den ersten Streifen 15.

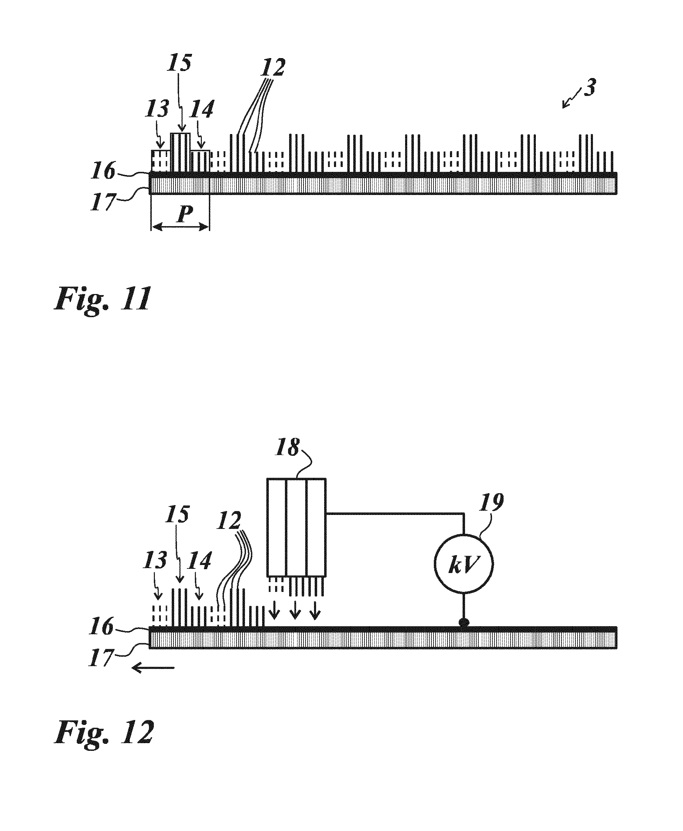

Die Fig. 11 und 12 zeigen ein weiters Fertigungsbeispiel des textilen Flächengebildes.

Ein textiles Flächengebilde 3 weist anstelle der textilen Grundschicht eine plattenförmige Grundschicht 17 auf, die beispielsweise als eine Kunststofffolie oder eine Schaumstoffschicht ausgebildet sein kann.

Auf der den Florfäden 12 zugewandten Oberfläche der Grundschicht 17 ist eine Haftschicht 16 angeordnet, die beispielsweise als eine Kleberschicht ausgebildet sein kann. Die Florfäden 12 in den ersten Streifen 15 und den zweiten und dritten Streifen 13, 14 sind in diesem Ausführungsbeispiel aus einem gleichartigen Garn, jedoch mit unterschiedlicher Länge ausgebildet. Hinsichtlich der Farb- und/oder Mustergestaltung kann das textile Flächengebilde 3 in dem dargestellten Ausführungsbeispiel wie die weiter oben beschriebenen Flächengebilde 1 ausgebildet sein (Fig. 1, 3 und 4 sowie Fig. 5 bis 7). Es kann auch vorgesehen sein, für die zweiten und dritten Streifen 13, 14 ein durch Temperatureinwirkung in seiner Länge schrumpfendes Garn einzusetzen, wobei diese Temperatureinwirkung zugleich zum Aushärten der Haftschicht 16 nutzbar sein kann.

Fig. 12 zeigt die Fertigung des in Fig. 11 dargestellten textilen Flächengebildes 3. Die mit der Haftschicht 16 beschichtete Grundschicht 17 wird unter einer Beflockungseinrichtung 18 vorbeigeführt, die in getrennten Vorratsbehältern die für die ersten Streifen 15 und die zweiten und dritten Streifen 13, 14 bestimmten Florfäden 12 bereitstellt, die sich hinsichtlich ihrer Länge und/oder ihrer Farbe und/oder Oberflächenstruktur unterscheiden. Zwischen der Beflockungseinrichtung 18 und der Grundschicht 17 ist ein elektrisches Hochspannungsfeld ausgebildet, das durch einen Hochspannungsgenerator 19 bereitgestellt wird. Die Florfäden 12 richten sich an dem senkerecht auf die Grundschicht 17 auftreffenden Hochspannungsfeld aus und stehen daher von der Grundschicht 17 senkrecht ab. Die Beflockungseinrichtung 18 kann wie ein Druckkopf ausgebildet sein, so dass beispielsweise zumindest die Vorratsbehälter für die Florfäden 12 der zweiten und dritten Streifen 13, 14 in Kammern unterteilt sein können, die entsprechend der vorgesehenen Musterausbildung mit unterschiedlich gefärbten Florfäden 12 befüllt sein können.

### Bezugszeichenliste

| | |
|---|---|
| 1 | textiles Flächengebilde |
| 2 | textiles Flächengebilde |
| 3 | textiles Flächengebilde |
| 11 | textile Grundschicht |
| 12 | Florfäden |
| 13 | zweiter Streifen |
| 14 | dritter Streifen |
| 15 | erster Streifen |
| 16 | Haftschicht |
| 17 | Grundschicht |
| 18 | Beflockungseinrichtung |
| 19 | Hochspannungsgenerator |
| 111 | Schussfaden |
| 112 | Kettfaden |
| 131, 132 | Polnoppen |
| 141, 142 | Polnoppen |
| 151 | Polnoppen |

## Patentansprüche

1. Textiles Flächengebilde (1, 3) mit mindestens einer flächigen Seite, die eine Streifenstruktur aufweist,
**dadurch gekennzeichnet,**
**dass** die Streifenstruktur aus parallel nebeneinander angeordneten Streifen gebildet ist, wobei die Streifen über ihre Längserstreckung konstante Höhe aufweisen und parallel nebeneinander angeordnete Streifen ein periodisches Profil von streifenförmigen Erhebungsbereichen und streifenförmigen Vertiefungsbereichen bilden,
**dass** die Periode des periodischen Profils mindestens einen einen streifenförmigen Erhebungsbereich bildenden maximal hohen ersten Streifen (15) aufweist, auf dessen einer Seite mindestens ein einen streifenförmigen Vertiefungsbereich bildender zweiter Streifen (13) angeordnet ist und auf dessen anderer Seite mindestens ein einen streifenförmigen Vertiefungsbereich bildender dritter Streifen (14) angeordnet ist,
wobei der zweite Streifen (13) und der dritte Streifen (14) niedriger als der erste Streifen sind und hinsichtlich Farbe und/oder Materialstruktur und/oder Höhe unterschiedlich ausgebildet sind, derart,
**dass** bei einer Betrachtung in einer Blickrichtung auf eine Seite des ersten Streifens der erste Streifen (15) den dritten Streifen (14) optisch abdeckt und in einer Blickrichtung auf die andere Seite des ersten Streifens der erste Streifen (15) den zweiten Streifen (13) optisch abdeckt und damit blickrichtungsabhängig unterschiedliche optische Effekte erhalten werden.

2. Textiles Flächengebilde nach Anspruch 1,
**dadurch gekennzeichnet,**
**dass** die Periode aus genau drei Streifen gebildet ist, nämlich dem einen ersten Streifen (15), dem einen zweiten Streifen (13) und dem einen dritten Streifen (14).

3. Textiles Flächengebilde nach Anspruch 1,
**dadurch gekennzeichnet,**
**dass** die Periode aus mehr als drei Streifen gebildet ist.

4. Textiles Flächengebilde nach Anspruch 3,
**dadurch gekennzeichnet,**
**dass** die Periode auf der einen Seite des ersten Streifens (15) mehrere zweite Streifen (13) aufweist, die gleich oder unterschiedlich hoch, jedoch jeweils niedriger sind als der erste Streifen.

5. Textiles Flächengebilde nach Anspruch 3 oder 4,
**dadurch gekennzeichnet,**
**dass** die Periode auf der anderen Seite des ersten Streifens (15) mehrere dritte Streifen (14) aufweist, die gleich oder unterschiedlich hoch, jedoch niedriger sind als der erste Streifen.

6. Textiles Flächengebilde nach einem der vorangehenden Ansprüche,
**dadurch gekennzeichnet,**
**dass** bei genau drei Streifen der eine zweite Streifen (13) und der eine dritte Streifen (14) gleiche Höhe aufweisen oder unterschiedliche Höhen aufweisen.

7. Textiles Flächengebilde nach einem der vorangehenden Ansprüche,
**dadurch gekennzeichnet,**
**dass** die zweiten und die dritten Streifen (13, 14) einen Streifenraster aus zwei unterschiedlichen, ineinander verschachtelten Bildern bilden, wobei ein erstes Bild die zweiten Streifen (13) umfasst und ein zweites Bild die dritten Streifen (14) umfasst.

8. Textiles Flächengebilde nach einem der vorangehenden Ansprüche,
**dadurch gekennzeichnet,**
**dass** das textile Flächengebilde (1, 3) bahnförmig ausgebildet ist und die Streifenstrukturen quer zur Längserstreckung der Bahn angeordnet sind.

9. Textiles Flächengebilde nach einem der Ansprüche 1 bis 7,
**dadurch gekennzeichnet,**
**dass** das textile Flächengebilde (1, 3) bahnförmig ausgebildet ist und die Streifenstrukturen parallel zur Längserstreckung der Bahn angeordnet sind.

10. Textiles Flächengebilde nach einem der vorangehenden Ansprüche,
**dadurch gekennzeichnet,**
**dass** das textile Flächengebilde (1, 3) eine textile Grundschicht (11) aufweist, von der Florfäden (12) und/oder Florschlingen abstehen, welche die ersten, zweiten und dritten Streifen (15, 13, 14) bilden.

11. Textiles Flächengebilde nach Anspruch 10,
**dadurch gekennzeichnet,**
**dass** die die ersten Streifen (15) bildenden Florfäden (12) und/oder Florschlingen aus einem in der Fadenachse nicht schrumpfbaren Garn ausgebildet sind, und
**dass** die die zweiten und dritten Streifen (13, 14) bildenden Florfäden (12) und/oder Florschlingen aus einem in der Fadenachse schrumpfbaren Garn ausgebildet sind.

12. Wand- und/oder Deckenverkleidung und/oder Fußbodenbelag für den Innenraum eines Fahrzeugs aus einem textilen Flächengebilde nach einem der vorangehenden Ansprüche.

13. Verkleidung für Wände und/oder Decken und/oder Einbauten für Innenräume eines Gebäudes aus einem textilen Flächengebilde nach einem der Ansprüche 1 bis 11.

14. Verkleidung und/oder Bezug für Möbel und/oder
Gebäudeeinrichtungsgegenstände und/oder Fahrzeugsitze und/oder Gebrauchsgegenstände aus einem textilen Flächengebilde nach einem der Ansprüche 1 bis 11.

15. Dekorstoff für Innendekoration gebildet durch ein textiles Flächengebilde nach einem der Ansprüche 1 bis 11.
